Europäisches Patentamt

European Patent Office

Office européen des brevets

(19)

(11) Publication number: **0 159 791**
**A2**

(12) **EUROPEAN PATENT APPLICATION**

(21) Application number: 85301645.9

(22) Date of filing: 11.03.85

(51) Int. Cl.⁴: **F 16 H 27/02**

(30) Priority: 09.03.84 CA 449214

(43) Date of publication of application: 30.10.85
Bulletin 85/44

(84) Designated Contracting States: **AT BE CH DE FR GB IT
LI LU NL SE**

(71) Applicant: Heathe, William R., 40 Richview Road PH 10,
Islington Ontario, M9A 4M9 (CA)

(72) Inventor: Heathe, William R., 40 Richview Road PH 10,
Islington Ontario, M9A 4M9 (CA)

(74) Representative: Bankes, Stephen C. D. et al, Baron &
Warren 18 South End Kensington, London W8 5BU (GB)

(54) Indexing system for rotary motion.

(57) A system for indexing rotary motion of a shaft such as a
turret shaft (24) of a turret lathe (10), wherein a number of
drive plates (26, 26') of regular polygonal outline are affixed
radially on the shaft in staggered serial arrangement. A corre-
sponding plurality of pistons (37, 37') are aligned with the
radial edges of the drive plates and engage the radial edges (39,
39') of the plates upon advancement, so as to rotate the shaft
a measured amount to the next index position. Apparatus for
driving the pistons in sequence such that only one piston (37)
is advanced while the previously advanced piston (37') is re-
tracted is also disclosed.

## INDEXING SYSTEM FOR ROTARY MOTION

This invention relates to indexing systems, such as are employed, for example, in machine tools such as turret lathes.

It is common in machine tools to have a shaft which is adapted to carry out indexed rotary motion. Such a shaft is present in, for example, turret lathes, where it is affixed to the turret head so as to drive the head to the selected index position, thereby positioning one of several cutting tools attached to the head for a machining operation.

The shaft may be indexed manually, or as is more often the case, by power drive means. In either case, it is desirable that the indexing operation be carried out quickly and accurately and that once accomplished the shaft be prevented from further rotation until movement to the next index position is required.

Typically, in turret lathes, the shaft is rigidly affixed at one end to the turret head and at the other end to a first face gear. A second face gear can be moved axially into and out of frictional engagement with the first face gear, and in such engagement holds the shaft from rotating. When indexing to the next index position with this arrangement it is necessary that the second face gear be axially moved out of frictional engagement with the first face gear, before the shaft is rotated through the required angle by means of hydraulic or pneumatic cylinders or by gearing acting on the outer circumferential surface of the first face gear. Once moved to the desired index position, the second face gear is axially moved back into frictional engagement with the first face gear so as to lock the shaft against further rotation.

The prior art arrangement described above is cumbersome and unnecessarily complex. It also suffers from a basic design drawback in that separate means for indexing the shaft and for holding the shaft in the index position are required, which separate means must be operated in proper sequence to avoid jamming of the mechanism.

It is an object of the present invention to provide an improved system for indexing rotary motion of a shaft in which these shortcomings of the prior art are overcome. This is achieved by providing a plurality of drive plates of regular polygonal outline on the shaft. The drive plates are evenly staggered so that each of the corners of each plate defines an index position of rotation of the shaft. One drive piston acts on the radial edge of each drive plate to cause, upon advancement of one piston, rotation of the shaft to the next index position, where it is held by that piston. Means are also provided for driving the pistons in sequence such that each piston is advanced in turn while the previously advanced piston is retracted.

The system for indexing rotary motion described herein is simple to operate and to manufacture. In use, there is no need for a separate unlocking function, as with prior art indexing systems. Additionally, the present invention replaces the face gears or other complicated gearing with drive plates of regular polygonal outline, preferably being square. These plates are simpler to manufacture and, hence, the system of the present invention is relatively cheaper to produce than previously known indexing systems.

There is thus provided according to the present invention a system for indexing rotary motion of a shaft comprising a housing in which the shaft is journalled for rotation about a transverse axis, a plurality of drive plates of regular polygonal outline affixed radially on the shaft in staggered serial arrangement for rotation with the shaft, the staggered corners of the plates defining a number of evenly spaced index positions of the shaft. A corresponding plurality of longitudinal pistons are positioned in the housing for reciprocatory motion, each of the pistons. being offset from the transverse axis and each being aligned with the radial edge of a respective drive plate. With this arrangement each piston engages the radial edge of its respective drive plate during advancement of the piston, thereby effecting rotation of the shaft to the next index position. This arrangement also allows for the withdrawal of each piston from engagement with the respective radial edge, such withdrawal being possible without further rotation of the drive plate by the piston during its retraction. Means are also provided for driving the pistons in sequence so as to effect ·the rotation of the shaft such that each piston is advanced while the previously advanced piston is retracted.

The pistons preferably each have an oblique abutment face for engaging the radial edge of the respective drive plate during advancement and may be driven by pneumatic or hydraulic drive cylinders, or by means of driven acme screws.

In a first embodiment, two drive plates of substantially square outline are affixed radially on the shaft in staggered serial arrangement for rotation with the shaft, the staggered corners of the plates defining eight evenly spaced index positions of the shaft. Two longitudinal pistons are positioned in the housing for reciprocatory motion, each piston being offset from the transverse axis and each being aligned with the radial edge of a respective drive plate so as to engage such edge during advancement of the piston, thereby effecting rotation of the shaft to the next index position and so as to withdraw from such engagement without further rotation of the drive plate by the piston during its retraction. Means for driving the two pistons in sequence so as to effect the rotation of the shaft are provided, such that each piston is advanced while the previously advanced piston is retracted. These means comprise a rack longitudinally positioned on each piston, an idler pinion engaging the racks of both pistons, and, drive means for alternately advancing each piston. The drive means may comprise two hydraulic or pneumatic drive cylinders acting one each on a respective piston to advance that piston.

A second embodiment of the present invention differs from the first embodiment just described by substituting acme screws as sequential driving means in place of the pneumatic or hydraulic drive cylinders. That is, two acme screws are operatively engaged one each to the pistons so as to drive the pistons along the axis of the acme screws at equal speed in opposite directions upon equal rotation of the acme screws.

In order that the invention may be more fully and readily understood, two embodiments thereof will now be described by way of example, with reference to the accompanying drawings in which:

Figure 1 is a perspective view of a turret lathe modified according to a first embodiment of the invention and representing one machine tool to which the invention may be applied.

Figure 2 is a top plan view, partly broken away, showing the component parts of an indexing system in accordance with the first embodiment of the invention.

Figure 3 is a sectional view along line 3-3 of Figure 2 showing the nearer of two pistons (shown in solid lines) in the fully advanced position and the further of the two pistons (shown in phantom lines) in the fully retracted position.

Figure 4 is a view similar to Figure 3, with the nearer of the two pistons (shown in solid lines) in the fully retracted position and the further of the two pistons (shown in phantom lines) in the fully advanced position.

Figure 5 is a sectional view along line 5-5 of Figure 2.

Figure 6 is a sectional view along line 6-6 of Figure 3.

Figure 7 is a partial end view of the indexing system of Figure 6.

Figure 8 is a perspective view, similar to Figure 1, of a turret lathe modified according to a second embodiment of the invention.

Figure 9 is a top plan view, partly in phantom, showing the component parts of the indexing system of Figure 8.

Figure 10 is a sectional view along line 10-10 of Figure 8, with the nearer of the two pistons (shown in solid lines) in the fully advanced position and the further of the two pistons (shown in phantom lines) in the fully retracted position.

Figure 11 is a view similar to Figure 10, with the nearer of the two pistons (shown in solid lines) in the fully retracted position and the further of the two pistons (shown in phantom lines) in the fully advanced position.

Figure 12 (preceding Figure 9) is a sectional view along line 12-12 of Figure 10.

Figure 13 is a perspective view, similar to Figure 1, of a turret lathe modified according to a third embodiment of the invention.

Figure 14 is a top plan view, partly in phantom, and partly cut away, showing the component parts of the indexing system of Figure 13.

Figure 15 is a sectional view along line 15-15 of Figure 13, with the nearer of the two pistons (shown in solid lines) in the fully advanced position and the further of the two pistons (shown in phantom lines) in the fully retracted position.

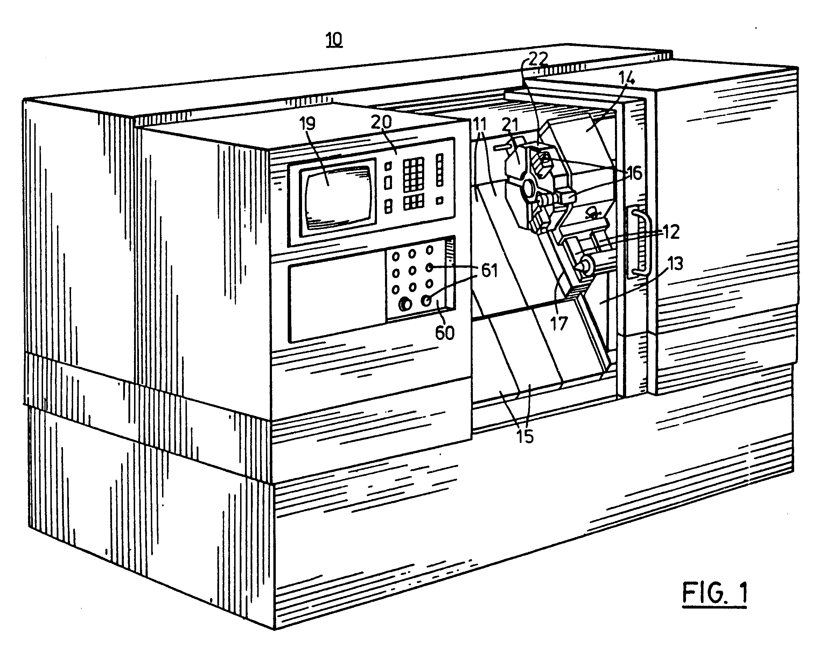

Figure 1 shows a programmable, computerized turret lathe, generally designated 10, modified according to the invention, with its inclined bedways (not shown) enclosed by cover members 11. An octagonal turret 14 is positioned on a saddle 17, which saddle longitudinally traverses the inclined bedways. The turret 14 slides across the saddle 17 on an inclined transverse set of bedways 12. A tailstock 13 longitudinally traverses a further set of bedways (not shown) enclosed by cover members 15. The turret 14 is fitted with a turret head 21 of octagonal outline, which head rotates in a vertical plane.

A number of cutting tools 16 are adjustably attached so as to project beyond the eight circumferential faces 22 of the octagonal turret head 21. In operation, a workpiece (not shown) is clamped in the face plate of the headstock (not shown) and the appropriate cutting tools 16 for the first machining operation are brought into the desired index position adjacent the workpiece. Once the first operation is completed on the work piece and it is desired to commence a second operation thereon, the appropriate cutting tool 16 is brought into the operative position by rotating the turret head 21 to the next index position, as will be described.

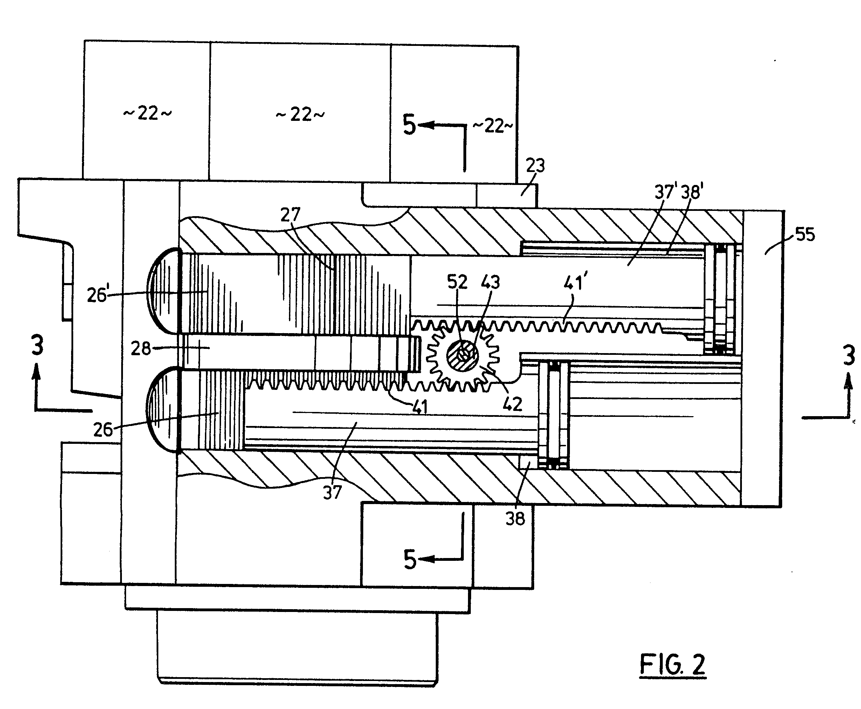

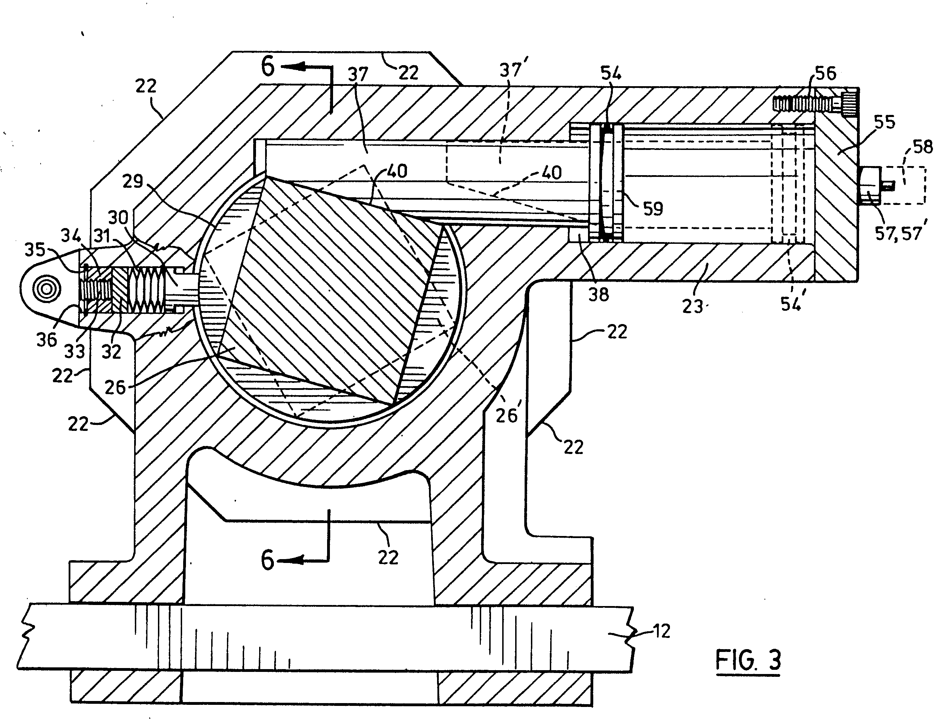

Referring to the first embodiment shown in Figures 1 - 7, there is shown a housing 23 in which a shaft 24, being a turret shaft, is journalled for rotation about a transverse axis defined by the longitudinal axis of the turret shaft 24, as through mounting on tapered roller bearings 25. The turret head 21 is rigidly affixed, as by welding or threading, to one end of the turret shaft 24 for rotation therewith. Two drive plates 26, 26' of substantially square outline are affixed on the turret shaft 24 for rotation with the shaft. The drive plates 26, 26' are affixed to the shaft in radial orientation thereto by any known affixation means, such as by welding, and are positioned in staggered serial arrangement to each other, such that the eight staggered corners 27 of the plates 26, 26' together define eight evenly spaced index positions of the turret shaft 24, each position representing 45° of rotation of turret shaft 24, and each corresponding to an index position of the turret head 21. The plates 26, 26' could, alternatively, be integral with the shaft 24, being machined thereon to the finished configuration. A cylindrical member 28 is positioned on the shaft 24 in interposed relation to the two drive discs 26, 26', and in similar fashion to these discs, may be either affixed to the shaft 24 as by welding, or be integral with the shaft 24, so as to rotate therewith. The diameter of the cylindrical member 28 is approximately equal to the length of the diagonal of the drive discs 26, 26' and its outer circumferential surface 29 is in frictional contact with the curved end of friction plug 30 (see Figure 3).

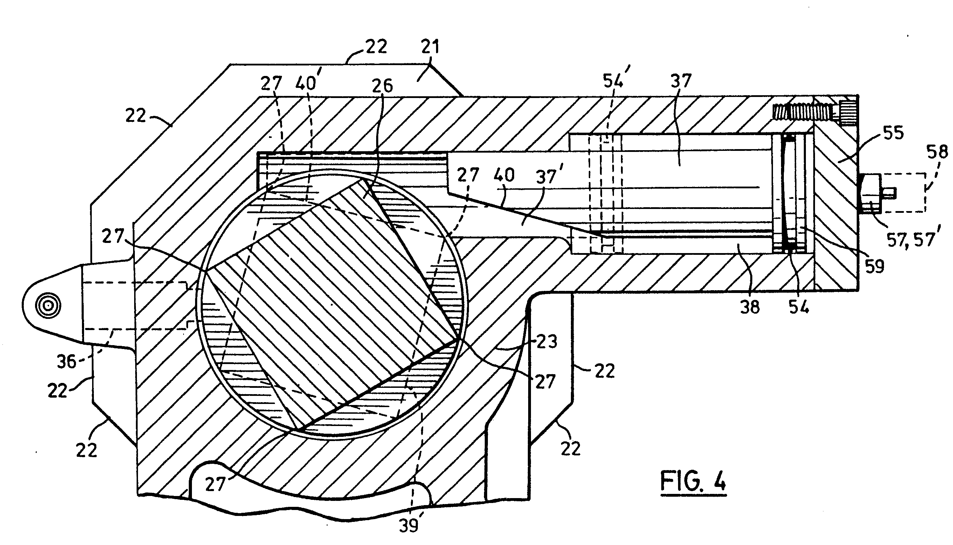

Spring means, in the form of disc springs 31, bias friction plug 30 against surface 29, the frictional loading being adjustable through movement of load disc 32 by means of socket set screw 33 threaded into adjusting disc 34, which in turn is retained in bore 36 by snap ring 35. The parts 30 - 35 thus form an assembly whose purpose is to maintain a constant frictional loading on cylindrical member 29 to resist turning of turret shaft 24 in the counterclockwise direction of Figures 3 and 4, as may occur where the weight distribution of the cutting tools 16 positioned on the turret head 21 is unbalanced.

Two longitudinal pistons 37, 37', preferably made of a nylon material filled with molybdenum sulphide, an example of such material being sold under the trade mark NYLATRON, are positioned in bores 38, 38' in the housing 23 for reciprocatory motion, each of the pistons 38, 38' being offset from the transverse axis defined by the turret shaft 24. As shown, this offset is 90°. The piston 37 is aligned longitudinally with the radial edge 39 of drive plate 26, and the piston 26' is respectively aligned with radial edge 39' of drive plate 26'. As shown, the pistons 37, 37' are positioned in the housing 23 such that they engage the respective radial edges 39, 39' during advancement of each piston at a point above the centre of rotation of the drive plates 26, 26'. In this manner, such advancement of the pistons causes rotation of the turret shaft 24 in a counterclockwise direction as seen in Figures 3 and 4, such that full advancement of either piston results in positioning of two radial faces 22 in horizontal planes. The operative index position could be at any of the circumferential faces 22, but typically it would be the lower of the two horizontal faces. Accordingly, full advancement of either piston 37, 37' causes rotation of turret shaft 24 through 45° of rotation to the next index position, thereby causing movement of each face 22 of turret head 21 through 45° of rotation. This rotation causes one face 22 to rotate out of the operative index position and the next face 22 to rotate into the operative index position. The pistons 37, 37' each withdraw from engagement with radial edges 39, 39' in the reverse direction of their advancement, so that they do not cause further rotation of the drive plates 26, 26' during such retraction.

In the arrangement shown, the pistons 37, 37' each have an oblique abutment face 40, 40' for engaging the radial edges 39, 39' of the respective drive plate 26, 26' during advancement of the pistons. The oblique face configuration shown is preferred as it initiates smooth contact with the radial edges 39, 39' upon advancement of the pistons 37, 37'.

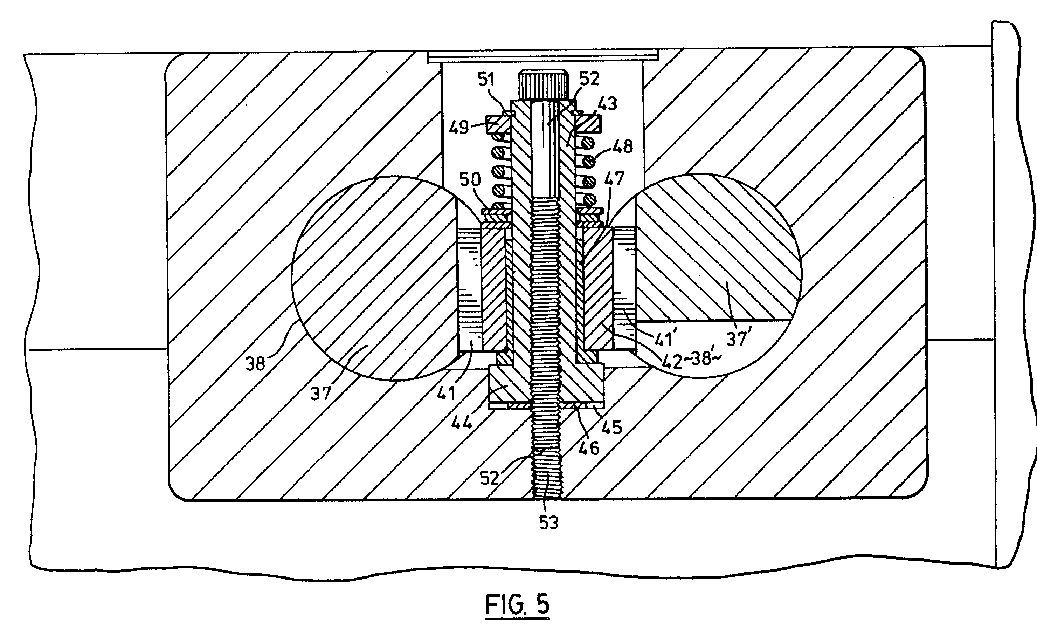

Means for driving the two pistons 37, 37' in sequence so as to effect rotation of the shaft in a continuous manner and so as to ensure that each piston 37, 37' is advanced while the previously advanced piston is retracted are provided. These means comprise a rack 41, 41' longitudinally positioned on each piston 37, 37', an idler pinion 42 positioned for rotation between the two pistons 37, 37' and engaging the racks of both pistons 37, 37', and, one-way drive means for alternately advancing each piston. The idler pinion 42 is mounted for rotation on pinion shaft 43, through bushing 47, said shaft 43 having an enlarged base portion 44, which portion sits in a depression 45 of the housing 23 atopped toothed lock washer 46. A coil spring 48 surrounds pinion shaft 43, being held between washer 49 and thrust bearing 50, the lower surface of which bearing, as seen in Figure 5, is in contact with idler pinion 42. Snap ring 51 holds washer 49 in place against spring 48, and the spring tension exerted on idler pinion 42 can be varied by adjustment of socket head cap screw 52, which screw threadingly engages bore 53 in housing 23.

As illustrated, the aforementioned drive means comprise cylinders defined by bores 38, 38', enlarged end portions 59, 59' on the ends of pistons 37, 37', respectively, said portions being dimensioned to slidingly fit within bores 38, 38', and adapted to accommodate seals 54, 54', and, manifold end cover 55. Manifold end cover 55 is held in place by socket head cap screws 56, and a manifold end cover gasket (not shown) is positioned between the cover 55 and the housing 23.

In operation, hydraulic or pneumatic pressure is introduced into one of the cylinders through either of fittings 57, 57'. If, for example, the pressure is introduced into the cylinder defined by bore 38, the piston 37 advances to the position shown in Figure 3, causing rotation of drive plate 26. At the same time, the idler pinion 42, rotates and causes an equal retraction of piston 37' to the position shown in phantom lines in Figure 3. When rotation of turret shaft 24 to the next index position is required, the pressure present in the cylinder defined by bore 38 is released, and an equal pressure is introduced into the cylinder defined by bore 38', causing piston 37' to advance to the position shown in phantom lines in Figure 4. Rotation of idler pinion 42 upon this advancement causes retraction of piston 37 to the position shown in solid lines in Figure 4. The cycle is repeated for subsequent indexing. Control of the pressure, whether it be hydraulic or pneumatic, is exercised by standard pneumatic or hydraulic control means acting through connecting hoses 58. Where pneumatic pressure is used as the driving force, the cylinders defined by bores 38, 38' are pneumatic drive cylinders, and where hydraulic pressure is used as the driving force, the cylinders defined by bores 38, 38' are hydraulic drive cylinders.

The automatic lathe 10 shown in Figure 1 operates under the control of a computer program, which program dictates the timing and the sequence of the various machining operations to be carried out by the lathe 10. In this manner, the lathe 10 is able to serially produce with minimal operator intervention a number of finished work pieces (not shown) all having substantially identical specifications. The steps of the program being run, in the form of programming language, move in sequence across video monitor 19, and can be interrupted or altered by manipulation of the keys of keypad 20. The control panel 60 contains other controls 61 for operation of the lathe, including start-up and shut down.

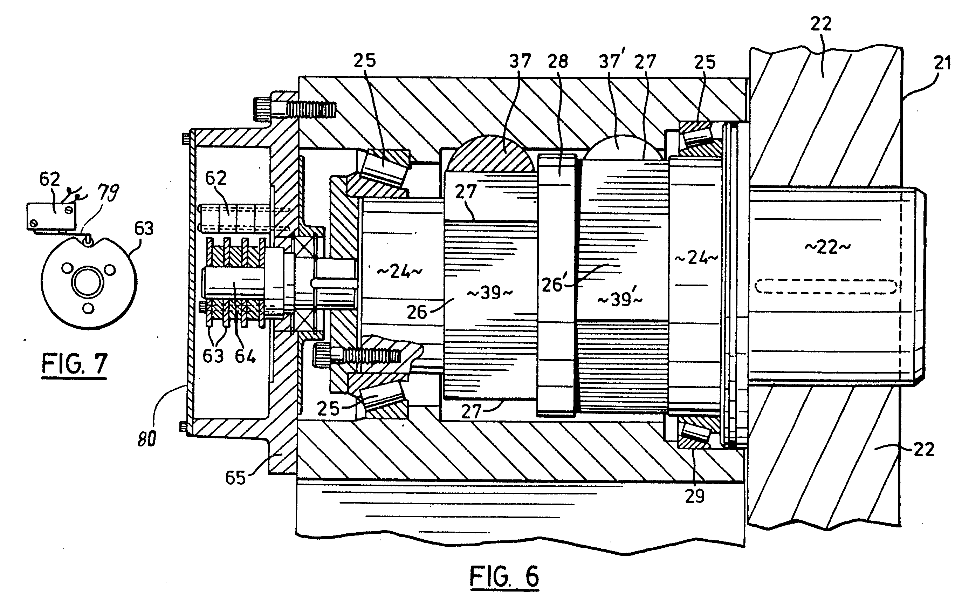

The rotation of the turret head 21 is one of the operations under control of the program. In order to facilitate such control, a pluarlity of switch means 62, each having a control arm 79, (see Figures 6 and 7) are provided, which control arms 79 interact in an obvious manner with cam means 63, rotatable with the shaft 24, to produce a binary coded primary signal indicative of the rotational position of the shaft 24. The switch means 62 may, for example, be standard single pole single throwmicroswitches manufactured by Microswitch, Cherry or other suppliers of standard commercial switches. As shown, the cam means 63 are mounted in spaced relationship on a cam shaft 64, which shaft is journalled in a known manner as shown for rotation with turret shaft 24 in a switch housing 65. The housing 65 is covered by end plate 80. A computer numerical control means (not shown), for example, a *General Numeric GN3TC computer numerical control unit, is housed in the lathe 10 and wired in a known manner so as to compare the binary coded primary signal from the switch means 62 with a predetermined reference signal generated by the program. If the primary and reference signals are not of equal value, the numerical control means initiates a command output signal to the piston driving means, so as to cause rotation of the shaft 24 to a rotational index position called for by the program, that is, where said primary signal and said reference signal are of equal value.

* Trade Mark

Alternatively, for the computer numerical control means discussed, there may be substituted known electro-mechanical control circuitry adapted to compare the binary coded primary signal with a predetermined reference signal to accomplish the same results.

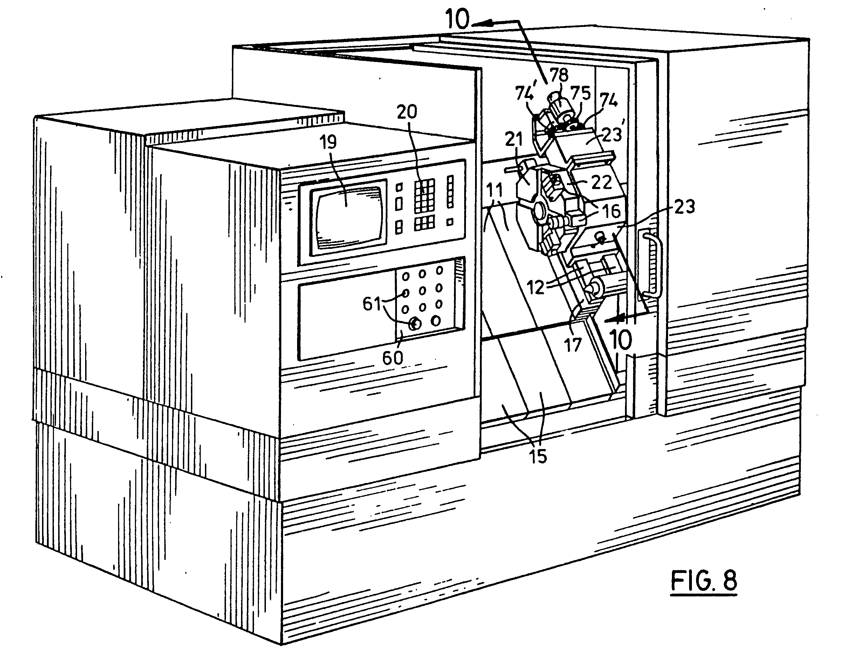

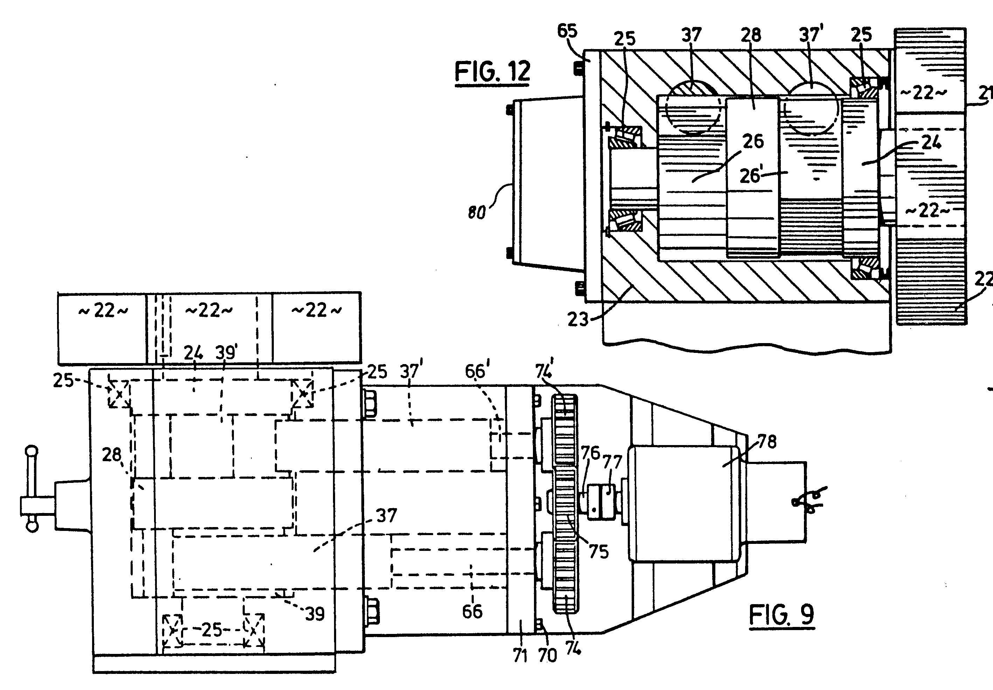

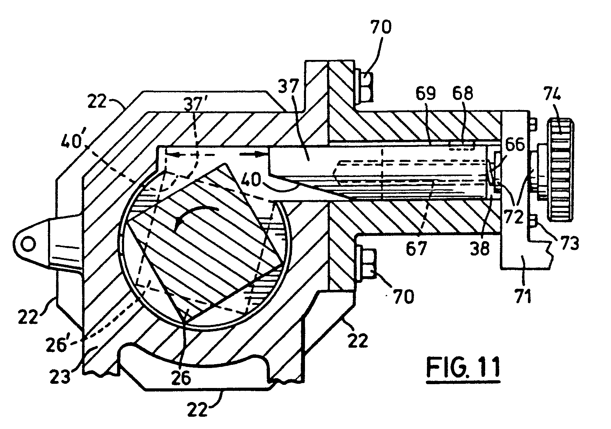

Referring now to Figures 8 - 12, the second indexing system illustrated is suitable where an all-electric drive mechanism is required. This second embodiment is similar to the first embodiment in all essential respects with the exception of the means provided for sequentially driving the pistons 37, 37'. Accordingly, like reference numerals are used in Figures 8 - 12 to denote analogous structures in the two embodiments, and only the essential non-obvious differences between the two embodiments will now be described.

The means for driving the two pistons 37, 37' in sequence so as to effect rotation of the turret shaft 24, each piston 37, 37' being advanced while the previously advanced piston is retracted, comprise two acme screws 66, 66' operatively engaging one each of the pistons 37, 37', respectively, so as to drive the pistons at equal speed in opposite directions upon simultaneous rotation of both acme screws at an equal speed. As shown, the acme screws 66, 66' operatively engage the pistons 37, 37' by means of a threaded longitudinal bore 67, 67' running longitudinally through the centre of each piston 37, 37' to a blind end adjacent the oblique abutment faces 40, 40'. Rotation of an acme screw in one direction causes the respective piston to move longitudinally therealong, while reversing the rotational direction of the acme screw causes the piston to move longitudinally therealong in the opposite direction. A key 68, 68' and keyway 69, 69' associated with each piston 37, 37', respectively, stabilizes the free end of the acme screw and the longitudinal travel of the pistons 37, 37' through the bores 38, 38', respectively. The keyways 69, 69' are located in a second housing portion 23' which portion is removably attached to the housing 23 by bolts 70. The outer ends of acme screws 66, 66' are each journalled for rotation, by thrust bearings 72, 72', in an end bracket 71, which bracket is bolted to housing portion 23' by bolts 73.

The two acme screws 66, 66' are reverse-threaded so that the desired result of advancing one piston while retracting the other piston can be achieved by rotation of the acme screws 66, 66' in the same direction by simple drive gear means. As shown, this gear means comprises a driven pinion 74, 74' rigidly affixed to the end of each of the acme screws 66, 66', respectively, and a single drive pinion 75 meshingly engaging both of the driven pinions 74, 74'. The driven pinion 75 is connected by a drive shaft 76, acting through a resilient drive coupling 77, to a reversible electric motor 78, which motor is mounted on the end bracket 71. Energization of motor 78 for either direction of rotation occurs, for example, upon receipt of an appropriate command output signal from the computer numerical or electro-mechanical control means previously described with respect to the first embodiment, which means can be analogously adopted to the second embodiment.

The use of reverse-threaded acme screws as shown is preferred, as it allows for simple drive gearing and matching of rotation speeds of the two acme screws 66, 66' through the use of the common drive pinion 75. Alternatively, the acme screws utilized may both be left- or right-handed, in which case they must, to achieve the desired result, be rotated by suitable and necessarily more complex drive gearing, in opposite directions.

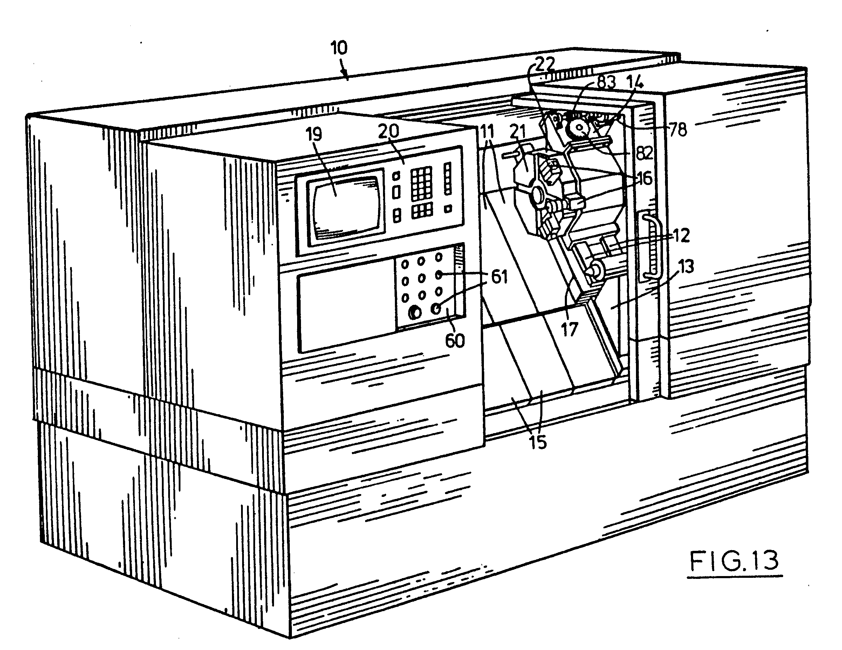

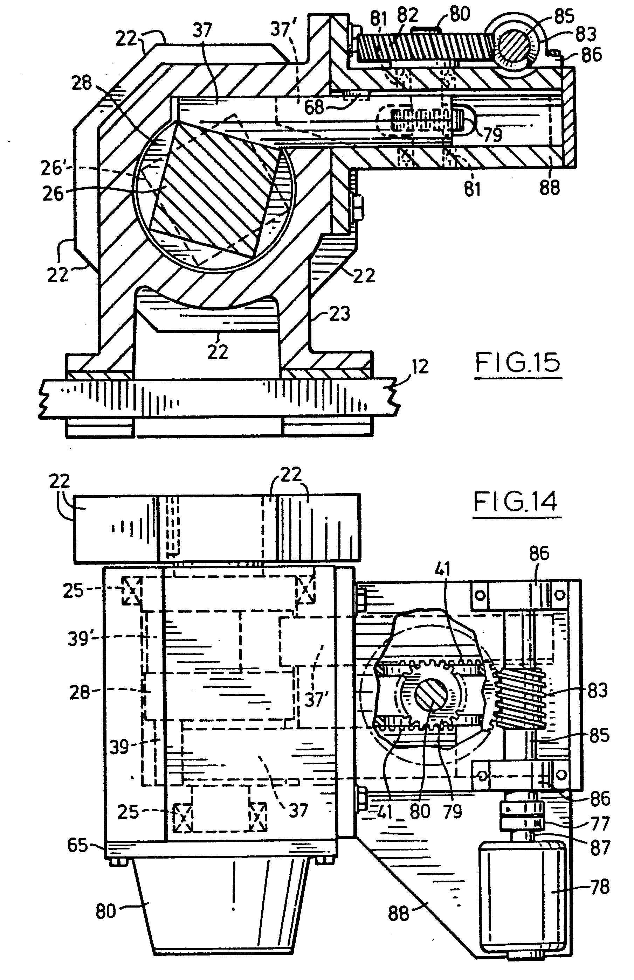

Referring now to Figures 13-15, the third indexing system illustrated combines features found in the first and second embodiments of the invention. That is, like the first embodiment shown in Figures 1-7, the third embodiment utilizes opposed racks longitudinally positioned on the pistons, with a pinion engagingly interposed therebetween. However, like the second embodiment of Figures 8-12, the third embodiment provides motor means to sequentially drive the pistons. Accordingly, like reference numerals are used in Figures 13-15 to denote analogous structures in the various embodiments, and only the essential non-obvious differences between the third embodiment and the previous two embodiments will now be described.

The means for driving the two pistons 37, 37' in sequence so as to effect rotation of the turret shaft 24, each piston 37, 37' being advanced while the previously advanced piston is retracted, comprise a rack 41, 41' longitudinally positioned on each piston 37, 37', a driven pinion 79 positioned for rotation between the two pistons 37, 37' and engaging the racks, 41, 41' of both pistons 37, 37', and means for alternately driving the pinion 79 in either rotational direction.

As illustrated, the aforementioned means for alternately driving the pinion 79 in either rotational direction include a worm 83 and a worm gear 84 operatively interconnected between the pinion 79 and a reversible motor 78. The reversible motor may be electrically, pneumatically or hydraulically driven. Where electrically driven, it is preferable that the motor be of the direct current type.

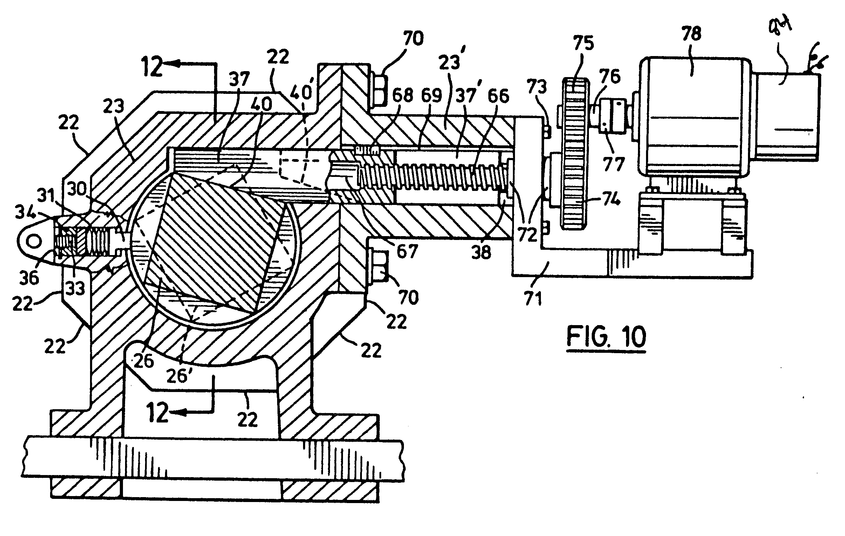

As illustrated, the drive pinion 79 is rigidly mounted by conventional means on a first drive shaft 80 for rotation therewith. The drive shaft 80 is itself journalled for rotation in a side bracket 88 of housing 23 by means of thrust bearings, 81, 81. The worm gear 82 is rigidly mounted, for example by key and keyway (not shown), adjacent the upper end of the first drive shaft 80 so as to transmit rotation to said shaft 80. The worm 83, which meshingly engages the worm gear 82, is rigidly mounted by conventional means on a second drive shaft 85 for rotation therewith. The shaft 85 is journalled for rotation on side bracket 88 of housing 23 by means of bearings (not shown) mounted in bearing brackets 86, 86 clamped to the side bracket 88. The second drive shaft 85 is connected, through a conventional resilient drive coupling 77 to the output shaft 87 of the reversible motor 78. The reversible motor 78 is affixed to side bracket 88 of housing 34 by bracket means (not shown) located on the bottom of the motor 78, in a manner analogous to the reversible motor 78 illustrated in Figure 10.

0159791

- 14 -

An electrically released spring-activated failsafe type brake (not shown) may be coupled to the motor 78, in a manner analogous to Figure 10, where such brake is shown as element 84. Energization of the motor 78 for either direction of rotation (and release of the brake, where so equipped), occurs upon receipt of an appropriate command output signal from the computer numerical or electro-mechanical control means previously described with respect to the first embodiment, which means can be analogously adapted to the third embodiment.

While but three specific examples of the present invention are herein shown and described, it will be understood that various changes in size, shape and arrangement of parts may be made without departing from the spirit of the invention. For example, the pneumatic or hydraulic cylinders referred to with respect to the first embodiment may be standard off the shelf items attached to the pistons 37, 37', and need not be structurally integral with the bores 38, 38' as shown. The idler pinion and rack arrangement could be replaced by a system of hydraulic or pneumatic one-way valves so as to effect even simultaneous advancement of a piston while the previously advanced piston is retracted. Also, the number of drive plates on the shaft can be increased beyond two. For example, where three drive plates of substantially square outline are used a turret head with twelve index positions can be developed. Similarly, systems having Nn index positions can be developed where, N = the number of drive plates on the shaft, and n is a number greater than three and equal to the number of corners on each drive plate. It is also possible to have drive plates of other than square outline. That is, drive plates may have any regular polygonal outline, for example, hexagonal, where appropriate adjustments in the geometry, such as the oblique angle of the abutment face of the pistons, are made. Such adjustments are a mere workshop improvement, and are fully contemplated by the instant invention.

## CLAIMS

1. A system for indexing rotary motion of a shaft, comprising:

a housing in which the shaft is journalled for rotation about a transverse axis;

a plurality of drive plates of regular polygonal outline affixed radially on the shaft in staggered serial arrangement for rotation with the shaft, the staggered corners of the plates defining a number of evenly spaced index positions of said shaft;

a corresponding plurality of longitudinal pistons, positioned in the housing for reciprocatory motion, each piston being offset from said transverse axis and being aligned with the radial edge of a respective drive plate so as to engage such edge during advancement of the piston thereby effecting rotation of the shaft to the next index position and so as to withdraw from such engagement without further rotation of the drive plate by the piston during retraction thereof; and

means for driving the pistons in sequence so as to effect said rotation of the shaft, each piston being advanced while the previously advanced piston is retracted.

2. A system according to claim 1 wherein each piston has an oblique abutment face for engaging the radial edge of the respective drive plate during advancement.

3. A system according to claim 2 wherein the means for driving the pistons comprises pneumatic drive cylinders.

4. A system according to claim 2 wherein the means for driving the pistons comprises hydraulic drive cylinders.

5. A system for indexing rotary motion of a shaft comprising:

a housing in which the shaft is journalled for rotation about a transverse axis;

two drive plates of substantially square outline affixed radially on the shaft in staggered serial arrangement for rotation with the shaft, the staggered corners of the plates defining eight evenly spaced index positions of said shaft;

two longitudinal pistons positioned in the housing for reciprocatory motion, each piston being offset from said transverse axis and being aligned with the radial edge of a respective drive plate so as to engage such edge during advancement of the piston thereby effecting rotation of the shaft to the next index position and so as to withdraw from such engagement without further rotation of the drive plate by the piston during retraction thereof; and

means for driving the two pistons in sequence so as to effect said rotation of the shaft, each piston being advanced while the previously advanced piston is retracted, said means comprising opposed racks longitudinally positioned on each piston, an idler pinion engagingly interposed between the racks, and drive means for alternately advancing each piston.

6. A system according to claim 5 wherein each piston has an oblique abutment face for engaging the radial edge of the respective drive plate during advancement.

7. A system according to claim 6 wherein the one-way drive means comprises two hydraulic drive cylinders each acting on a respective one of said pistons to advance same.

8. A system according to claim 6 wherein the drive means comprises two pneumatic drive cylinders each acting on a respective one of said pistons to advance same.

9. In a turret lathe having a turret shaft, a system according to claim 1.

10. In a turret lathe having a turret shaft, a system according to claim 5.

11. A system according to claim 1 wherein two drive plates of substantially hexagonal outline are affixed radially on the shaft in staggered serial arrangement for rotation with the shaft, the staggered corners of the plates defining twelve evenly spaced index positions of said shaft.

12. A system according to claim 1 further comprising switch means interacting with.cam means rotatable with the shaft to produce a binary coded primary signal indicative of the rotational position of the shaft;

computer numerical control means adapted to compare said primary signal with a predetermined reference signal, and, if said signals are not of equal value, initiate a command output signal to said means for driving the pistons so as to cause rotation of said shaft to a rotational index position wherein said primary and said reference signals are of equal value.

13. A system according to claim 1 further comprising switch means interacting with cam means rotatable with the shaft to produce a binary coded primary signal indicative of the rotational position of the shaft; and

electro-mechanical control circuits adapted to compare said primary signal with a predetermined reference signal, and, if said signals are not of equal value, initiate a command output signal to said means for driving the pistons so as to cause rotation of said shaft to a rotational index position wherein said primary and said reference signals are of equal value.

14. A system for indexing rotary motion of a shaft comprising:
a housing in which the shaft is journalled for rotation about a transverse axis;
two drive plates of substantially square outline affixed radially on the shaft in staggered serial arrangement for rotation with the shaft, the staggered corners of the plates defining eight evenly spaced index positions of said shaft;
two longitudinal pistons positioned in the housing for reciprocatory motion, each piston being offset from said transverse axis and being aligned with the radial edge of a respective drive plate so as to engage such edge during advancement of the piston thereby effecting rotation of the shaft to the next index position and so as to withdraw from such engagement without further rotation of the drive plate during retraction of the piston; and

0159791

means for driving the two pistons in sequence so as to effect said rotation of the shaft, each piston being advanced while the previously advanced piston is retracted, said means comprising to acme screws operatively engaging one each of the pistons so as to drive said pistons at equal speed in opposite directions upon equal rotation of both acme screws.

15. A system according to claim 14 wherein the two acme screws are reverse-threaded and are adapted to rotate in the same direction by drive gear means.

16. A system according to claim 15 wherein said gear means comprises a driven pinion positioned on each of said acme screws and a drive pinion meshingly engaging both of said driven pinions.

17. A system according to claim 14 further comprising switch means interacting with cam means rotatable with the shaft to produce a binary coded primary signal indicative of the rotational position of the shaft; and
computer numerical control means adapted to compare said primary signal with a predetermined reference signal, and, if said signals are not of equal value, initiate a command output signal to said means for driving the pistons so as to cause rotation of said shaft to a rotational index position wherein said primary and said reference signals are of equal value.

18. A system according to claim 14 further comprising switch means interacting with cam means rotatable with the shaft to produce a binary coded primary signal indicative of the rotational position of the shaft; and
electro-mechanical control circuits adapted to compare said primary signal with a predetermined reference signal, and, if said signals are not of equal value, initiate a command output signal to said means for driving the pistons so as to cause rotation of said shaft to a rotational index position wherein said primary and said reference signals are of equal value.

19. A system for indexing rotary motion of a shaft comprising:

a housing in which the shaft is journalled for rotation about a transverse axis;

two drive plates of substantially square outline affixed radially on the shaft in staggered serial arrangement for rotation with the shaft, the staggered corners of the plates defining eight evenly spaced index positions of said shaft;

two longitudinal pistons positioned in the housing for reciprocatory motion, each piston being offset from said transverse axis and being aligned with the radial edge of a respective drive plate so as to engage such edge during advancement of the piston thereby effecting rotation of the shaft to the next index position and so as to withdraw from such engagement without further rotation of the drive plate during retraction of the piston; and

means for driving the two pistons in sequence so as to effect said rotation of the shaft, each piston being advanced while the previously advanced piston is retracted, said means comprising opposed racks longitudinally positioned on each piston, a driven pinion engagingly interposed between the racks, and means for alternately driving said driven pinion in either rotational direction.

20. A system according to claim 19 wherein said means for alternately driving the driven pinion include a worm and a worm gear operatively interconnected between said pinion and a reversible drive motor.

21. A system according to claim 19 further comprising switch means interacting with cam means rotatable with the shaft to produce a binary coded primary signal indicative of the rotational position of the shaft; and

computer numerical control means adapted to compare said primary signal with a predetermined reference signal, and, if said signals are not of equal value, initiate a command output signal to said means for alternately driving said driven pinion

0159791

so as to cause rotation of said shaft to a rotational index position wherein said primary and said reference signals are of equal value.

22. A system according to claim 19 comprising switch means interacting with cam means rotatable with the shaft to produce a binary coded primary signal indicative of the rotational position of the shaft; and

electro-mechanical control circuits adapted to compare said primary signal with a predetermined reference signal, and, if said signals are not of equal value, initiate a command output signal to said means for alternately driving said driven pinion so as to cause rotation of said shaft to a rotational index position wherein said primary and said reference signals are of equal value.

FIG. 1

FIG. 2

FIG. 3

FIG. 4

FIG. 5

**FIG. 7**

**FIG. 6**

FIG. 8

FIG. 12

FIG. 9

FIG. 10

0159791

FIG. 11

FIG.13

0159791

FIG.15

FIG.14